Europäisches Patentamt

European Patent Office

Office européen des brevets

(19)

(11) Veröffentlichungsnummer : **0 319 750 B1**

(12)                    **EUROPÄISCHE PATENTSCHRIFT**

(45) Veröffentlichungstag der Patentschrift :
28.08.91 Patentblatt 91/35

(51) Int. Cl.⁵ : **F16H 57/12, F16H 1/28**

(21) Anmeldenummer : 88119163.9

(22) Anmeldetag : 18.11.88

(54) Spielarmes ins Langsame übersetzendes zweistufiges Planetengetriebe.

(30) Priorität : 09.12.87 DE 3741634

(43) Veröffentlichungstag der Anmeldung :
14.06.89 Patentblatt 89/24

(45) Bekanntmachung des Hinweises auf die
Patenterteilung :
28.08.91 Patentblatt 91/35

(84) Benannte Vertragsstaaten :
CH DE FR GB IT LI SE

(56) Entgegenhaltungen :
EP-A- 0 084 197
FR-A- 2 111 639
FR-A- 2 335 752

(73) Patentinhaber : Wittenstein, Manfred,
Dipl.-Ing.
Bismarckstrasse 19
W-6991 Igersheim (DE)

(72) Erfinder : Wittenstein, Manfred, Dipl.-Ing.
Bismarckstrasse 19
W-6991 Igersheim (DE)
Erfinder : Orlowski, Bernhard, Dipl.-Ing.
Johannesstrasse 81
W-7000 Stuttgart 1 (DE)

(74) Vertreter : Pfusch, Volker, Dipl.-Ing.
Dinkelsbühler Strasse 12F
W-7000 Stuttgart 50 (DE)

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein spielarmes ins Langsame übersetzendes zweistufiges Planetengetriebe nach dem Oberbegriff des Patentanspruchs 1.

Ein derart aufgebautes Planetengetriebe ist aus FR-A-2111639 bekannt. Über die Art der Verzahnung der einzelnen Räder und die mit diesem bekannten Getriebe erzielbaren Spielgenauigkeiten ist dort nichts gesagt.

Hiervon ausgehend besteht die Aufgabe der Erfindung darin, ein solches zweistufiges Planetengetriebe bei relativ hohen Eingangsdrehzahlen, d. h. solchen über 3000 U/min bei insgesamt geräuscharmem Lauf mit einer äußerst spielarmen Abtriebsstufe betreiben zu können, bei der das Spiel auch nach langen Laufzeiten nicht bleibend zunehmen soll. Die Übersetzung ins Langsame soll etwa bei Werten i = 3 – 10 in der ersten Stufe und i = 3 – 8 in der zweiten Stufe liegen.

Zur Vermeidung sich während der Betriebszeit vergrößernder bleibender Spiele ist es aus FR-A-2335752 und EP-A-0084187 bereits bekannt, die Planetenräder mit einer positiven Profilverschiebung gegenüber dem Hohl- und Sonnenrad, zwischen denen sie geführt werden, zu verzahnen und den Zahneingriff axial durch Federkraft so zu beaufschlagen, daß ein spielausgleichendes axiales Nachgleiten an den Zahnflanken möglich ist.

Durch solche Federkraftbeaufschlagungen entstehen im Betrieb unerwünscht hohe Reibungsverluste. Darüber hinaus ist der Aufbau solcher federbeaufschlagter Getrieberäder kompliziert und aufwendig und daher insbesondere nicht zum Einsatz in ein zweistufiges Getriebe mit hoch drehender Antriebsstufe geeignet.

Die erfindungsgemäße Aufgabe wird daher durch eine Ausbildung des gattungsgemäßen Planetengetriebes nach den kennzeichnenden Merkmalen des Patentanspruchs 1 gelöst.

Die erfindungsgemäße Lösung weist insbesondere folgende Vorteile auf.

Durch die schräge Verzahnung in der ersten Stufe kann diese hochdrehend ausgelegt werden. Dadurch können u.a. wiederum kleinbauende hochdrehende Elektromotoren als Antriebsaggregate verwendet werden, deren hohe in die erste Getriebestufe eingeleitete Drehzahlen durch entsprechende Wahl eines ins Langsame führenden Übersetzungsverhältnisses von mindestens etwa i = 9 stark herabgesetzt werden können unter gleichzeitiger Erhöhung des aus der Abtriebsstufe abnehmbaren Drehmomentes.

Bei einer hohen Übersetzung ins Langsame von der ersten zur zweiten Stufe beeinflußt ein Zahnflankenspiel innerhalb der ersten Stufe dasjenige am Ausgang der Abtriebsstufe nur noch äußerst gering. Denn das Spiel der ersten Stufe wird im Verhältnis des festgelegten ins Langsame führenden Übersetzungswertes verkleinert. Die Größe des Spieles in der Abtriebsstufe entspricht damit nur noch einem durch den Wert des Übersetzungsverhältnisses dividierten Wert des Spieles in der ersten Stufe.

Für die Bestimmung der Spiel-Qualität des Getriebes ist bei ins Langsame übersetzenden zweistufigen Getrieben ausschließlich das Laufspiel am Ausgang der zweiten Stufe maßgebend. Wird das Übersetzungsverhältnis zwischen den beiden Stufen somit groß genug gewählt, kann in der ersten Stufe ohne wesentliche Beeinflußung der Spiel-Qualität am Ausgang der zweiten Stufe ein relativ großes Laufspiel vorgesehen werden. Ein solches nicht zu kleines Laufspiel ist wiederum Voraussetzung für eine einwandfreie Funktion eines schrägverzahnten hochdrehenden Planetengetriebes, wie es in der ersten Getriebestufe im Hinblick auf die Erzielung eines guten Laufverhaltens verwirklicht werden muß. Bei hochdrehenden schrägverzahnten Planetengetrieben kommt es nämlich bei zu engem Laufspiel zu unerwünscht hohen Erwärmungen.

Gewährleistet das Übersetzungsverhältnis zwischen erster und zweiter Getriebestufe einen weitgehenden Ausschluß einer Übertragung des Spiels von der ersten auf die zweite niedriger drehende Stufe, so muß in der zweiten Stufe lediglich noch dafür Sorge getragen werden, daß nicht in dieser zweiten Stufe selbst Spiele vorhanden sind oder im Betrieb entstehen. Für die Vermeidung solcher Spiele sorgen die dort vorgesehenen axial gegeneinander verstellbaren konischen Zahnräder. Durch die Ausbildung jener Zahnräder als konische Zahnräder, d.h. Zahnräder mit über die Breite der Zahnflanke sich stetig verändernder Profilverschiebung, und deren axial gegeneinander mögliche Verstellbarkeit läßt sich das Laufspiel der ersten Stufe auf ein Minimum begrenzen. Dieses minimale Laufspiel läßt sich auch über lange Betriebslaufzeiten aufrechterhalten, indem durch z.B. Verschleiß aufgetretenes Spiel durch axiales Gegeneinanderrücken der Zahnräder immer wieder ausgleichbar ist. So kann der sich in der Abtriebsstufe einstellende und das Spiel stark vergrößernde Verschleiß auf einfache Weise auch nach langen Betriebslaufzeiten noch laufend eliminiert werden.

Eine Erwärmung durch geringes Laufspiel muß in der zweiten Stufe nicht befürchtet werden, da die Drehzahlen dort in unkritisch niedrige Bereiche gelegt werden können.

Eine vorteilhafte Ausgestaltung des erfindungsgemäßen Getriebes ist Gegenstand des Unteranspruchs.

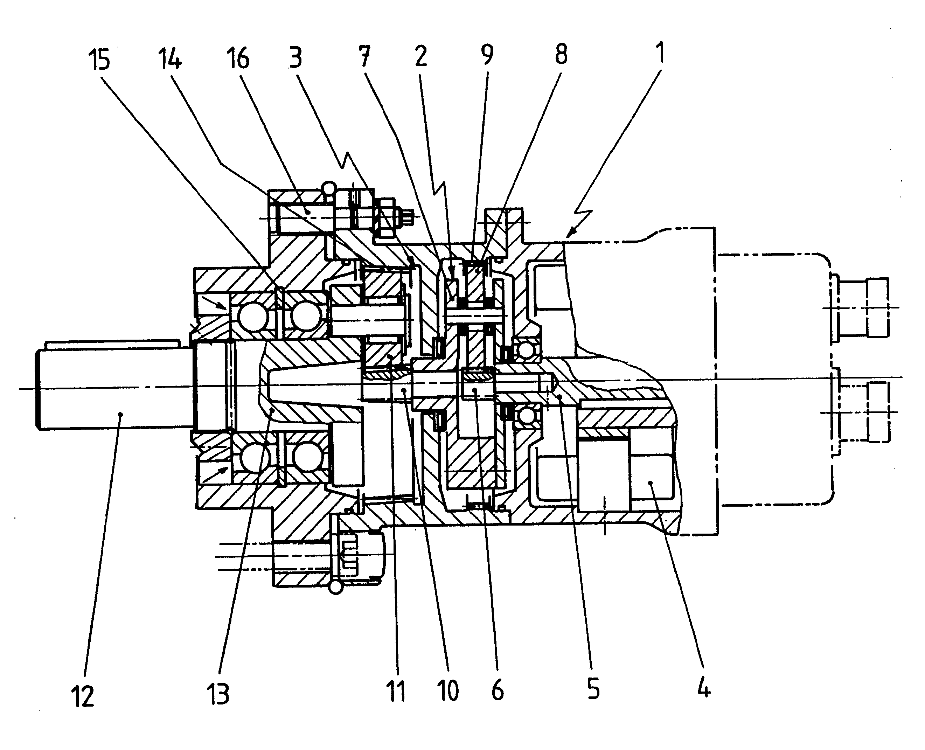

Ein Ausführungsbeispiel der Erfindung ist in der Zeichnung dargestellt, die ein zweistufiges spielarmes Planetengetriebe teils im Schnitt, teils in Ansicht zeigt.

In einem über die Gesamtlänge zweifach geteilten Getriebegehäuse 1 befinden sich in einer gemeinsamen Längsachse ausgerichtet eine erste hochdrehende Getriebestufe 2 und eine zweite niedriger drehende Abtriebs-Getriebe-Stufe 3.

Die erste Getriebestufe 2 ist von einem gleichachsig innerhalb des Getriebegehäuses 1 angeordneten Elektromotor mit einer Drehzahl von 3000
U/min angetrieben. Durch Übersetzung ins
Langsame von der ersten Getriebestufe in die zweite
Getriebestufe $i_{ges.}$ = 10 liegt die Abtriebsdrehzahl des
Getriebes bei 300 U/min. Der Elektromotor ist in der
Zeichnung mit dem Bezugszeichen 4 angedeutet.

In der ersten Getriebestufe 2 sind alle Zahnräder
schrägverzahnt. Ein fest mit der durch den Elektromotor 4 angetriebenen Antriebswelle 5 verbundenes
Sonnenrad 6 treibt dort die in einem Planetenradträger 7 gelagerten Planetenräder 8 an. Die Planetenräder 8 kämmen in einem fest in dem Getriebegehäuse
angeordneten Hohlrad 9. Sowohl das Sonnenrad 6
wie auch der Planetenradträger 7 mit den Planetenrädern 8 sind jeweils axial in dem Getriebegehäuse
gelagert. Von der ersten Getriebestufe 2 erfolgt der
Abtrieb in die zweite Getriebestufe 3 über ein fest mit
dem Planetenradträger 7 verbundenes Sonnenrad
10. Das Sonnenrad 10 greift wiederum in Planetenräder 11 ein, die in dem fest mit der Abtriebswelle 12
verbundenen Planetenradträger 13 gelagert sind und
sich in dem fest mit dem Getriebegehäuse 1 verbundenen Hohlrad 14 abwälzen.

In der zweiten Getriebestufe 3 sind sämtliche
Zahnräder konisch ausgebildet, d.h. sie besitzen eine
sich über die Zahnbreite geringfügig stetig verändernde Profilverschiebung. Diese Profilverschiebung ist bei dem Sonnenrad 10 und dem Hohlrad 14
jeweils zur gleichen Seite gerichtet, während sie bei
den Planetenrädern zur entgegengesetzten Seite eingearbeitet ist.

Der Planetenradträger 13 der zweiten Stufe ist in
einer längs der Getriebeachse verschiebbaren Kappe
15 gelagert. Axial verstellbar ist diese Kappe 15 über
mit dem Mittelteil des Getriebegehäuses 1 verbundene Schrauben 16, die über den Umfang der Kappe
verteilt sind. Dadurch, daß der Planetenradträger 13
axial fixiert in der Kappe 15 gelagert ist, ist das Zahnspiel in der zweiten Getriebestufe durch einfache
axiale Verschiebung der Kappe 15 gegenüber dem
Mittelteil des Getriebegehäuses 1, in dem die Kappe
axial geführt ist, justierbar.

Die zweite Stufe kann gerad- oder schrägverzahnt sein, sofern nur die beschriebene Profilverschiebung vorhanden ist.

## Patentansprüche

1. Spielarmes ins Langsame übersetzendes
zweistufiges Planetengetriebe mit in jeder Stufe einem angetriebenen Sonnenrad (6, 10), einem sich
drehenden Planetenradträger (7, 13) mit Planetenrädern (8, 11) sowie einem starr mit dem Getriebegehäuse verbundenen Hohlrad (9, 14), bei dem das
Sonnenrad (10) der niedriger drehenden zweiten
Stufe (3) mit dem Planetenradträger (7) der höher
drehenden ersten Stufe (2) fest verbunden ist,
**dadurch gekennzeichnet,** daß die erste Stufe (2) mit
jeweils über die gesamte Breite der einzelnen Zähne
gleichbleibenden Zahnprofilen schrägverzahnt ist,
während bei der Verzahnung in der zweiten Stufe die
einzelnen Zahnflanken eine über die jeweilige Zahnbreite sich stetig verändernde Profilverschiebung
besitzen (konische Zahnräder), wobei diese bei dem
Hohl (14)- und Sonnenrad (10) einerseits und den
Planetenrädern (11) andererseits in jeweils entgegengesetzter Richtung verläuft und daß der axiale
Abstand zwischen dem Planetenradträger (13) mit
den Planetenrädern (11) einerseits und dem Hohl
(14)- und Sonnenrad (10) andererseits zur Justierung
des Zahnspiels verstellbar ist.

2. Spielarmes Planetengetriebe nach Anspruch
1, **dadurch gekennzeichnet,** daß der Planetenradträger (7) mit dem fest damit verbundenen Sonnenrad
(10) und seinen Planetenrädern (8) radial ausschließlich in in diesen Rädern kämmenden anderen Zahnrädern (Hohlrad (9) der höher drehenden ersten Stufe
und Planetenräder (11) der niedriger drehenden zweiten Stufe) gelagert ist.

## Claims

1. A minimal-play two-stage step-down planetary
gear mechanism with in each stage a driven sun
wheel (6, 10), a rotating planet wheel carrier (7, 13)
with planet wheels (8, 11) and with a hollow wheel (9,
14) connected rigidly to the gear casing, and in which
the sun wheel (10) of the more slowly rotating second
stage (3) is rigidly connected to the planet wheel carrier (7) of the more rapidly rotating first stage (2),
characterised in that the first stage (2) has helically
cut teeth with tooth profiles which are constant over
the total width of the individual teeth, whereas where
the teeth of the second stage are concerned, the individual tooth flanks have a profile shift which varies
steadily over the width of the relevant tooth (conical
gear wheels), the said profile shift in the case of the
hollow wheel (14) and sun wheel (10) on the one hand
and the planet wheels (11) on the other extending in
respectively opposite directions, and in that the axial
distance between the planet wheel carrier (13) with
the planet wheels (11) on the one hand and the hollow
wheel (14) and sun wheel (10) on the other can be
varied in order to adjust the tooth clearance.

2. A minimal-play planetary gear mechanism
according to Claim 1, characterised in that the planet
wheel carrier (7) with the sun wheel (10) rigidly connected thereto and its planet wheels (8) is mounted
radially solely in other gear wheels (hollow wheel (9) of the more rapidly rotating first stage and the planet gears (11) of the more slowly rotating second stage) which mesh with the sun wheel (10) and planet wheels (8).

## Revendications

1. Réducteur planétaire à deux étages, comprenant dans chaque étage une roue solaire (6, 10) entraînée, un porte-pignons satellites (7, 13) en rotation avec des roues planétaires (8, 11) ainsi qu'une couronne de train planétaire (9, 14) solidaire de la boîte d'engrenages, la roue solaire (10) du second étage (3) tournant à une vitesse inférieure étant solidaire du porte-pignons satellites (7) du premier étage (2) tournant à une vitesse plus grande, **caractérisé en ce** que le premier étage (2) présente des dentures hélicoïdales avec des profils des dents constants sur respectivement toute la largeur des différentes dents, tandis que pour les dentures dans le second étage les différents flancs des dents présentent un déport de profil variant en continu sur la largeur respective des dents (roues coniques), ledit déport de profil étant orienté pour la couronne de train planétaire (14) et la roue solaire (10) d'une part et les roues planétaires (11) d'autre part dans des directions opposées ; et que la distance axiale entre le porte-pignons satellites (13) et les roues planétaires (11) d'une part et la couronne de train planétaire (14) et la roue solaire (10) d'autre part est réglable pour l'ajustement du jeu des dents.

2. Engrenage planétaire à faible jeu selon la revendication 1, caractérisé en ce que le porte-pignons satellites (7) avec la roue solaire (10) qui lui est solidaire et avec ses roues planétaires (8) est monté radialement exclusivement dans d'autres roues dentées (couronne de train d'engrenage (9) du premier étage tournant à une vitesse supérieure et roues planétaires (11) du second étage tournant à une vitesse inférieure) qui coopèrent avec lesdites roues.

EP 0 319 750 B1